# EUROPÄISCHE PATENTSCHRIFT

(11) **EP 0 758 565 B1**
(45) Veröffentlichungstag und Bekanntmachung des Hinweises auf die Patenterteilung: **28.11.2001**
(21) Anmeldenummer: 96112982.2
(22) Anmeldetag: 13.08.1996
(51) Int. Cl.: B21D 26/02, B21D 28/28

(54) **Verfahren und Vorrichtung zum Herstellen von doppelwandigen Durchbrechungen in Bauteilen nach dem Innenhochdruck-Umform-verfahren sowie ein damit hergestellter Querlenker**
Process and apparatus for realising perforations through double walls of structural members by the internal pressure forming method and a herewith manufactured transversal oscillating lever
Procédé et dispositif pour la réalisation de perforations à travers de double paroies d'éléments de construction par le procédé de formage par pression interne ainsi qu'un bras oscillant réalisé de cette façon

(30) Priorität: 16.08.1995 DE 19530055
(43) Veröffentlichungstag der Anmeldung: 19.02.1997
(73) Patentinhaber: Schuler Hydroforming GmbH & Co. KG, 57234 Wilnsdorf-Wilden (DE)
(72) Erfinder: Schäfer, August Wilhelm, 57489 Drolshagen (DE); Scholz, Hans Werner, 38448 Wolfsburg (DE); Handel, Adolf, 38110 Braunschweig (DE)
(74) Vertreter: Pollmeier, Felix, Dipl.-Ing.

(56) Entgegenhaltungen:
- EP-A- 0 588 528
- EP-A- 0 593 950
- DE-B- 1 602 394
- DE-C- 4 322 063
- TECHNISCHE MITTEILUNGEN KRUPP, Nr. 1, April 1994, ESSEN DE, Seiten 45-50, XP000446387 ALAN D. ELDRED ET AL.: "VARI-FORM - a hydroforming technique for manufacturing complex tubular components"

## Beschreibung

Die Erfindung betrifft ein Verfahren und eine Vorrichtung zum Herstellen von doppelwandige Durchbrechungen, insbesondere zylindrische Lageraugen aufweisenden Bauteilen nach dem Innenhochdruck-Umformverfahren aus einem metallischen, in ein Umformwerkzeug eingelegten Rohrabschnitt.

Das Innenhochdruck-Umformverfahren (von vorzugsweise rohrförmigen Werkstücken) ist im Stand der Technik bekannt und in der einschlägigen Literatur beschrieben (vgl. DE-Z "Werkstattechnik 79 (1989)", VDI-Fortschrittsberichte, Reihe 2, Nr. 142, VDI-Verlag 1987). Es wird vorzugsweise zum Herstellen unterschiedlich geformter Hohlkörper angewendet. Wie bekannt, wird beim Innenhochdruck-Umformverfahren ein Rohrabschnitt, z.B. aus Stahl oder Kupfer, in ein mehrteiliges Innenhochdruck-Umformwerkzeug ohne feste Innenmatrize mit Umformstößeln und einer Innenhochdruckquelle eingelegt. Nach dem Verschließen der Enden des Rohrabschnitts durch die Umformstößel wird der Rohrabschnitt mit Hilfe eines geeigneten Druckmittels mit hohem Innendruck beaufschlagt und unter gleichzeitiger Beaufschlagung mit axialem Druck (durch die Umformstößel) auf die Rohrwandung umgeformt. Der Axialdruck und der Innendruck bewirken, daß sich der Rohrabschnitt an die die endgültige Form des Hohlkörpers aufweisende Innenkontur bzw. -wandung des Umformwerkzeugs anlegt. Beim Innenhochdruck-Umformen wird der Werkstoff in den plastischen Zustand versetzt, der während des gesamten Umformvorgangs unter Berücksichtigung von Werkstoffverfestigung und etwaiger Werkzeugkräfte aufrechterhalten wird.

Es hat sich als vorteilhaft herausgestellt, auch solche Bauteile durch Innenhochdruck-Umformung herzustellen, die als tragende Konstruktionselemente eingesetzt und mit anderen Bauteilen verbunden bzw. an diese angelenkt werden, wie beispielsweise im Falle von im Fahrzeugbau verwendeten Querlenkern oder Doppelquerlenker-Vorderachsen, an denen die Vorderräder über Stoßdämpfer befestigt sind. Diese Bauteile besitzen einen im wesentlichen rechteckigen Querschnitt, und zum Ausbilden der Anlenk- bzw. Befestigungspunkte werden ie beiden einander gegenüberliegenden Wände des Hohlkörpers ausgestanzt, d.h. mit einer doppelwandigen Durchbrechung versehen, in die dann noch eine Stahl- ode Kunststoffbuchse eingebracht, z.B. mit dem Hohlkörper verschweißt werden muß. Um ein solches Bauteil mit Buchsen in der Lageraugen bzw. Durchbrechungen herzustellen, sind somit verschiedene Arbeitsgänge erforderlich.

Durch die EP-A-0 588 528 ist es bekanntgeworden, in mehreren Bearbeitungsstationen zunächst einen rohrförmigen Rohling nach dem Innenhochdruck-Umformverfahren umzuformen und danach mit verschiedenen Werkzeugen zu bearbeiten. Dabei wird der umgeformte Rohrabschnitt unter anderem von zwei einander gegenüberliegenden Stanz-Stempeln gelocht, so daß einander fluchtend gegenüberliegende, zylindrische Öffnungen in den Rohrwandungen ausgebildet sind. Eine andere Variante sieht vor, mit einem entsprechend gestalteten Stempel die eine Rohrwandung amboßartig einzudrücken bzw. auszuformen, ohne daß in diesem Fall allerdings die Wandung völlig durchtrennt wird.

Der Erfindung liegt daher die Aufgabe zugrunde, ein Verfahren und eine Vorrichtung der eingangs genannten Art zu schaffen, mit denen sich mindestens eine doppelwandige Durchbrechung aufweisende Bauteile mit verringertem Aufwand herstellen lassen.

Diese Aufgabe wird in verfahrensmäßiger Hinsicht dadurch gelöst, daß an dem Rohrabschnitt eine domartige Abzweigung hergestellt, die Domkappe von einem den sich während des Umformens ausbildenden Dom abstützenden ersten Gegenhalter gegen einen das Bauteil dem Dom gegenüberliegend abstützenden zweiten Gegenhalter nach innen umgestülpt wird, bis die Domkappe und die von dem zweiten Ggenhalter abgestützte Fläche des Bauteils eine Doppelblechlage bilden, die einem Trennwerkzeug zugeführt wird. Die der Erfindung zugrundeliegende Überlegung, das beim Innenhochdruck-Umformen an sich bekannte Ausbilden einer oder mehrerer domartiger Abzweigungen zum Herstellen komplett fertiger Lageraugen in dem Hohlkörper-Formteil auszunutzen, macht jegliche Nachbearbeitung entbehrlich. Denn es brauchen in die Durchbrechungen bzw. Durchsetzungen der einander gegenüberliegenden Wandteile des Hohlkörper-Formteils keine separaten Buchsen mehr eingebracht zu werden. Diese ergeben sich nämlich selbsttätig durch das Umstülpen der domartigen Ab- bzw. Verzweigung ausgehend von der Domkappe nach innen; es versteht sich, daß die Höhe der domartigen Abzweigung so ausgelegt worden ist, daß sich nach dem Umstülpen die Domkappe an die gegenüberliegende Wandung des Hohlkörper-Formteils legt und dort eine Doppelblechlage bildet. Die Stülpweite, d.h. das von der Außenwand der domartigen Abzweigung bis zu dem Gegenhalter bzw. der Außenwand der durch das Umstülpen erreichten Buchse gerechnete Maß ist größer/gleich fünfmal der Wandstärke des Doms.

Sobald die Domkappe und die von dem gegenüberliegenden zweiten Gegenhalter abgestützte Fläche des Hohlkörper-Formteils die Doppelblechlage einnehmen, wird nach einem bevorzugten Vorschlag der Erfindung die Domkappe von dem das Umstülpen bewirkenden, ersten Gegenhalter angekerbt, was das anschließende Ausstanzen der beiden Blechronden (Domkappe und abgestützte Hohlkörper-Formteilfläche) begünstigt. Zum Ausstanzen werden die beiden Gegenhalter in Umstülprichtung bewegt.

Es wird vorgeschlagen, daß das Umstülpen der Domkappe gegen den während des Umstülpvorgangs feststehenden zweiten Gegenhalter mit einer nur geringfügig über dem Innendruck in dem Bauteil liegenden Gegenhalterkraft durchgeführt wird. Hiermit wird ausgeschlossen, daß es schon mit Beginn des Umstülpens zu einem während des Fließens des Materials gegebenenfalls nachteiligen Einschneiden bzw. Ankerben der Domkappe kommt; diese - dann verfahrensmäßig gewünschte - Wirkung tritt vielmehr erst dann ein, wenn die Domkappe zur Anlage gegen die abgestützte Fläche des Hohlkörper-Formteils gelangt.

Die Erfindung sieht als Alternative zum Ausstanzen vor, daß die Doppelblechlage mit einem Trennwerkzeug beseitigt bzw. entfernt wird, vorzugsweise durch einen Fräser oder Bohrer. Diesen Werkzeugen könnte eine Einspannvorrichtung zugeordnet werden, der der verformte Rohrabschnitt nach dem Erzeugen der Doppelblechlage und Entnehmen aus dem Umformwerkzeug zugeführt wird.

Ein Vorschlag der Erfindung sieht vor, daß zum Ausstanzen der Blechronden die beiden Gegenhalter gemeinsam mit einer gegenüber der Vorschubgeschwindigkeit des ersten Gegenhalters beim Umstülpvorgang beschleunigten Stanzgeschwindigkeit bewegt werden. Die beschleunigte Geschwindigkeit unterstützt das Abreißen der Domkappen-Blechronde entlang der Ankerbung und das Ausstanzen der darunterliegenden Blechrone des Hohlkörper-Formteils.

Eine zur Durchführung des Verfahrens bevorzugte Vorrichtung sieht vor, daß ein die Domkappe einer hergestellten domartigen Abzweigung abstützender erster Gegenhalter mit einer stirnseitigen Schneidkante ausgebildet ist, die sich vorteilhaft an einem im Durchmesser gegenüber dem Halterschaft kleineren Gegenhalterkopf befindet, und zunächst die Domkappe gegen einen den Dom gegenüberliegend abstützenden zweiten Gegenhalter nach innen zu einer Doppelblechlage umstülpt und anschließend die Doppelblechlage ausstanzt. Während der Halterschaft des die domartige Abzweigung abstützenden ersten Gegenhalters paßgenau in die korrespondierende Ausnehmung der Werkzeugteile eintaucht, definiert der Abstand, den der demgegenüber kleinere Gegenhalterkopf von der Innenwand der Werkzeugausnehmung einnimmt, die Stülpweite beim Umstülpen der Domkappe bzw. der domartigen Abzweigung.

Nach einer im Zusammenhang mit dem Ausstanzen der Blechronden bevorzugten Ausführung der Erfindung ist der Gegenhalterkopf mit einer der Schneidkantenstufe nachgeschalteten Kalibrierstufe versehen. Diese legt nach dem Ankerben und Ausstanzen der Blechronden den Kalibrierbeginn und das Kalibrierende fest, das nämich dann gegeben ist, wenn die Schulter im Übergang von der Kalibrierstufe zu em Halterschaft die nach oben überstehende Wulst des Stülpradius zum Fertigmaß des im Bereich der Durchsetzung bzw. des Lagerauges hohlkammerartigen Wandprofil niedergedrückt hat. Die nach unten gestülpte Wandung der domartigen Abzweigung schließt - bzw. untergreift - die von dem Hohlkörper-Formteil definierte Außenwandung dichtend ab.

Eine Ausgestaltung der Erfindung sieht vor, daß der Durchmesser des zweiten Gegenhalters um etwas mehr als die doppelte Dicke der Wandung der domartigen Abzweigung größer ist a!s die Schneidkantenstufe des Gegenhalterkopfes des ersten Gegenhalters. Bei auf diese Weise aufeinander abgestimmten Abmessungen wird einerseits das Umstülpen der ausgebildeten domartigen Abzweigung und andererseits auch das Abkerben, das anschließende Ausstanzen sowie das Kalibrieren des hohlkammerartigen Wandprofils im Bereich der Durchsetzung bzw. des Lagerauges gewährleistet. Bei einem erfindungsgemäßen Querlenker ist eine Wandung des Lagerauges materialeinheitlich durch Innenhochdruck-Umformen an mindestens einer Querlenkerwand angeformt. Das bedeutet, daß das Lagerauge vorliegt, ohne noch eine Buchse einsetzen zu müssen, die vielmehr aus dem Wandmaterial des Querlenkers bereitgestellt wird.

Weitere Einzelheiten und Vorteile der Erfindung ergeben sich aus den Patentansprüchen und der nachfolgenden Beschreibung, in der am Beispiel des Herstellens von Lageraugen an einem Querlenker durch Ausstanzen von Blechronden einer erzeugten Doppelblechlage eine Ausführung des Gegenstandes der Erfindung näher erläutert ist. Es zeigen:
- Fig. 1: als Einzelheit ein Umformwerkzeug einer weiter nicht gezeigten, als solche hinlänglich bekannten Innenhochdruck-Umformmaschine, im Längsschnitt dargestellt;
- Fig. 2: als Einzelheit ein durch Innenhochdruck-Umformung hergestelltes, kompliziertes, mehrere Durchsetzungen bzw. Lageraugen aufweisendes Hohlkörper-Formteil (Querlenker); und
- Fig. 3a, 3b, 3c: als Einzelheit verschiedene Arbeitsstufen beim Ausbilden einer Durchsetzung bzw. doppelwandigen Durchbrechung eines Bauteiles, z.B. wie in Fig. 2 dargestellt, nämlich den Beginn des Umstülpens einer ausgebildeten domartigen Abzweigung (Fig. 3a), das Ende des Umstülpvorgangs einschließlich Ankerben der Domkappe (Fig. 3b) und das Ausstanzen der Blechronden und Kalibrieren die Durchsetzung bzw. des Lagerauges (Fig. 3c), im Teilschnitt schematisch dargestellt.

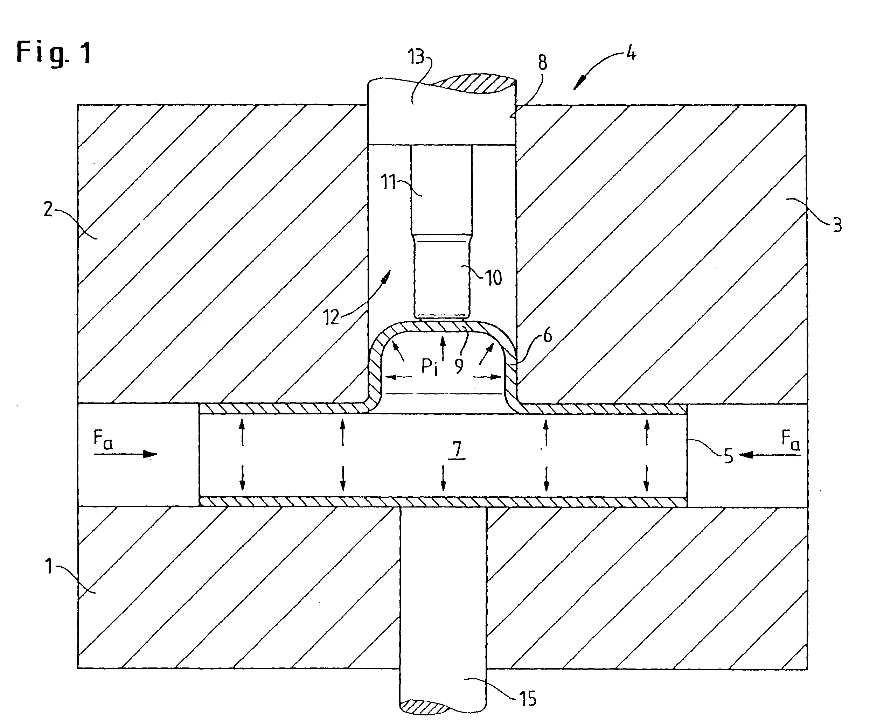

Die Fig. 1 zeigt in sehr schematischer Weise ein in den Werkzeugteilen 1, 2, 3 eines Umformwerkzeuges 4 einer nicht dargestellten Umformmaschine nach dem Innenhochdruck-Umformverfahren aus einem zwischen die Werkzeugteile 1 bis 3 eingelegten Rohrabschnitt hergestelltes Hohlkörper-Formteil 5. Die während des Aufweitstauchens einerseits die offenen Enden des Rohrabschnitts verschließenden und andererseits das Material für eine aufgehalste domartige Abzweigung 6 nachdrückenden Umformstößel sind nicht dargestellt und lediglich durch die von ihnen aufgebrachte Axialkraft Fa gekennzeichnet; über zumindest einen der gegeneinander arbeitenden Umformstößel wird das Druckmittel in das Hohlkörperinnere 7 eingeleitet. Unter dem somit herrschenden Innendruck Pi (vgl. auch die nicht bezifferten Druckpfeile) wird die domartige Abzweigung 6 zwischen den beiden Werkzeugteilen 2, 3 ausgebildet; das Aufhalsen der Abzweigung 6 wird nach oben hin von einem Gegenhalter 8 begrenzt, der zwischen die Werkzeugteile 2, 3 eingreift und sich - den Dom bzw. die Abzweigung 6 abstützend - gegen die Domkappe 9 legt.

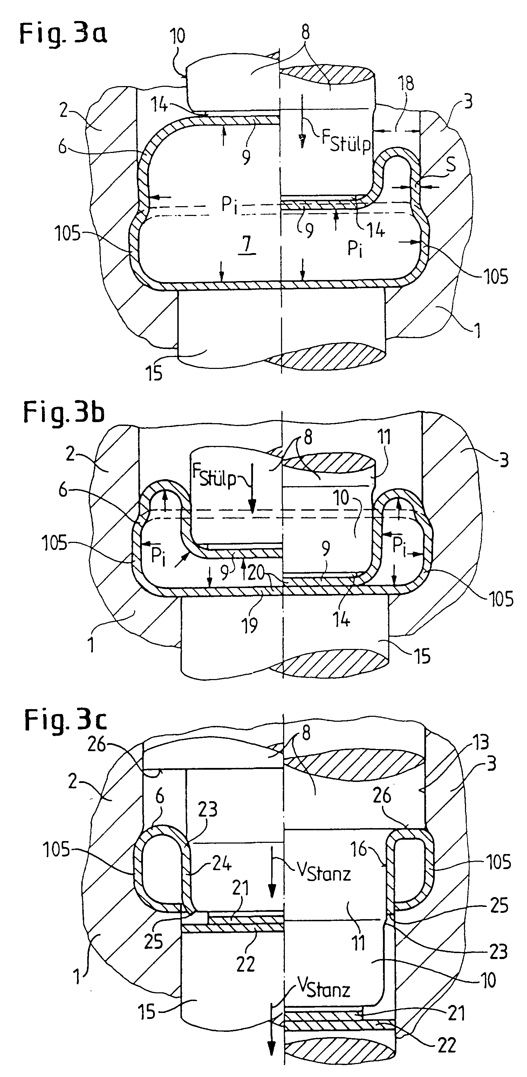

Der die Abzweigung 6 abstützende, erste Gegenhalter 8 weist - wie näher den Fig. 3a bis 3c zu entnehmen ist - einen gestuften, nämlich aus einer vorderen Schneidkantenstufe 10 und einer dieser nachgeschalteten Kalibrierstufe 11 bestehenden Gegenhalterkopf 12 auf. Dieser besitzt einen gegenüber dem Halterschaft 13 kleineren Durchmesser und ist in sich ebenfalls noch einmal unterschiedlich dimensioniert, und zwar ist die eine Schneidkante 14 - gegebenenfalls ausgebildet als lediglich ein gegenüber der Schneidkantenstufe 10 geringfügig vorspringender Ansatz - aufweisende Schneidkantenstufe 10 von kleinerem Durchmesser als die Kalibrierstufe 11. Dem ersten Gegenhalter 8 liegt ein in dem Werkzeugteil 1 angeordneter zweiter Gegenhalter 15 gegenüber; dessen Durchmesser ist größer als der des Gegenhalterkopfes 12 des ersten Gegenhalters 8.

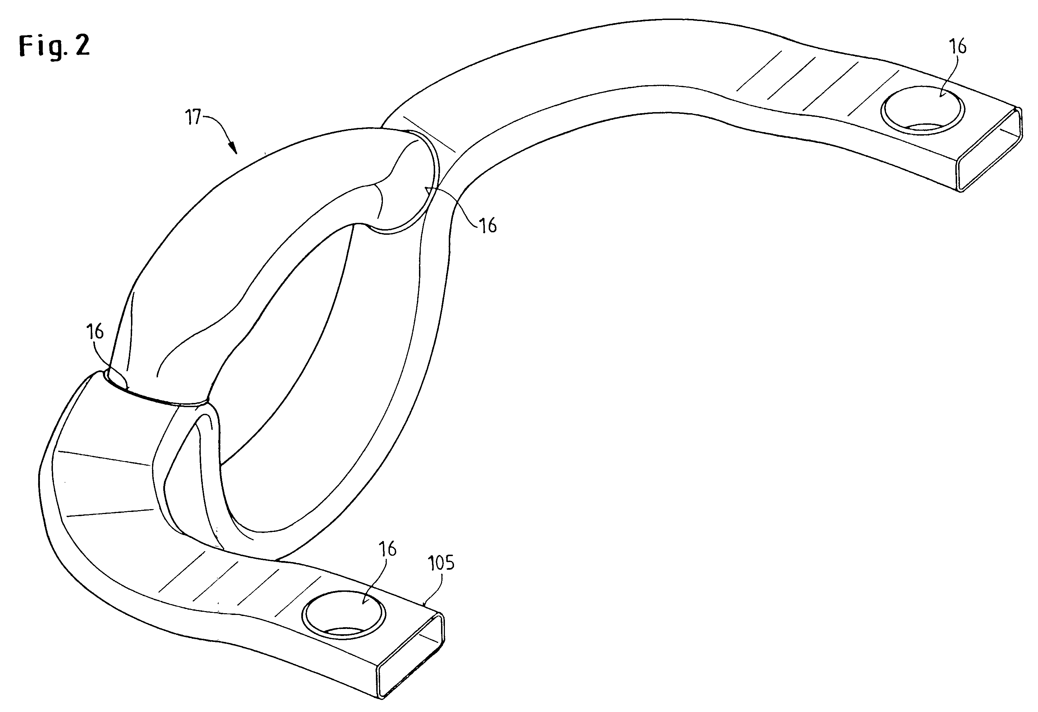

Den Fig. 3a bis 3c lassen sich einzelne Betriebsphasen zum Herstellen eines Durchsetzungen bzw. zylindrische Lageraugen 16 aufweisenden Hohlkörper-Form- bzw. Bauteils, z.B. ein in Fig. 2 dargestellter Querlenker für den Einbau in ein Fahrzeug, entnehmen. Es wird aus einem in das Umformwerkzeug eingelegten Hohlkörper-Flachprofil 105 durch Aufweiten unter dem Innendruck Pi eine domartige Abzweigung 6 ausgebildet, deren Wölbung nach oben hin durch den Gegenhalter 8 begrenzt wird (vgl. die linke Hälfte von Fig. 3a), gegen den sich die Domkappe 9 der aufgewölbten Abzweigung 6 anlegt. Durch Beaufschlagung des an einen geeigneten Stellantrieb angeschlossenen Gegenhalters 8 mit der Kraft F_{Stülp} (vgl. den Pfeil in der rechten Hälfte von Fig. 3a) wird das Umstülpen der Domkappe 9 nach innen eingeleitet. Die Stülpweite 18 entspricht gemäß der rechten Hälfte von Fig. 3a mindestens der fünffachen Wanddicke S des Hohlkörper-Flachprofils 105. Der Innendruck Pi liegt nur geringfügig unterhalb der durch F_{Stülp} gewirkten Kraft des Gegenhalters 8, so daß die Schneidkante 14 die Domkappe 9 nicht schon während des Umstülpens einschneidet bzw. ankerbt.

Im Zuge des fortlaufenden Umstülpens nähert sich die Domkappe 9 immer mehr der von dem während des Umstülpens feststehenden Gegenhalter 15 abgestützten Hohlkörperfläche 19 an (vgl. die linke Hälfte von Fig. 3b), bis die Domkappe 9 zur Anlage an die Hohlkörperfläche 19 gelangt und mit dieser dort eine Doppelblechlage 20 bildet (vgl. die rechte Hälfte von Fig. 3b). Sofern die Doppelblechlage 20 nicht in einem Zuge ausgestanzt, sondern abweichend vom Ausführungsbeispiel durch Bohren oder Fräsen entfernt bzw. abgetrennt wird, kann das bis hier umgeformte Bauteil dem Umformwerkzeug entnommen und einem separaten Trennwerkzeug zugeführt werden.

Beim Ausstanzen der Blechlage 20 kerbt in der in Fig. 3b angezeigten Position die Schneidkante 14 die zwischen dem ersten Gegenhalter 8 und dem feststehenden zweiten Gegenhalter 5 geklemmte Domkappe 9 an. Sobald das geschehen ist, werden die Gegenhalter 8 und 15 in Umstülprichtung gemeinsam mit beschleunigter Geschwindigkeit V_{Stanz} angetrieben, wobei die Domkappe entlang der Ankerbung als Blechronde 21 abreißt und die von dem zweiten Gegenhalter 15 abgestützte Hohlkörperfläche als Blechronde 22 ausgestanzt wird (vgl. die linke Hälfte von Fig. 3c).

Sobald die im Übergangsbereich von der Schneidkantenstufe 10 zur Kalibrierstufe 11 angeordnete Kalibrierwulst 23 des Gegenhalterkopfes 12 sich gegen die nach innen umgestülpte Wandung der domartigen Abzweigung 6 legt (vgl. die linke Hälfte von Fig. 3c), beginnt das sich im Zuge der Gegenhalterbewegung fortsetzende Kalibrieren der ausgestanzten Durchsetzung zu dem fertigen Lagerauge 16 (vgl. die rechte Hälfte von Fig. 3c). Das an der Trennstelle der ausgestanzten Domkappe 9 bzw. der Blechronde 21 nach innen vorstehende Ende 25 (Wandvorsprung) der Wandung 24 der domartigen Abzweigung 6 wird dabei gerichtet und an die Stirnkante der Ausstanzung des Bodens des Hohlkörper-Flachprofils 5 angepreßt, wie in der rechten Hälfte von Fig. 3c dargestellt. Der Umstülpvorgang ist abgeschlossen und das Lagerauge 16 völlig ausgeformt, nachdem gemäß der rechten Hälfte von Fig. 3c die radial gegenüber der Kalibrierstufe 11 vorspringende Schulter 26 des Halterschaftes 13 die in der rechten Hälfte von Fig. 3c gezeigte Position erreicht hat, in der sie dem aus der Umstülpung erreichten hohlkammerartigen Wandprofil voll anliegt. Es ist danach ein einbaufertiges, ohne Nachbearbeitung buchsenartig eingefaßte Durchbrechungen bzw. Lageraugen besitzendes Hohlkörper-Flachprofil (vgl. Fig. 2) fertiggestellt, das sich als Querlenker für den Einbau in ein Fahrzeug eignet.

## Patentansprüche

1. Verfahren zum Herstellen von doppelwandige Durchbrechungen, insbesondere zylindrische Lageraugen (16) aufweisenden Bauteilen nach dem Innenhochdruck-Umformverfahren aus einem metallischen, in ein Umformwerkzeug (4) eingelegten Rohrabschnitt (5; 105),
**dadurch gekennzeichnet,**
**daß** an dem Rohrabschnitt eine domartige Abzweigung hergestellt, die Domkappe (9) von einem den sich während des Umformens ausbildenden Dom abstützenden ersten Gegenhalter (8) gegen einen das Bauteil dem Dom gegenüberliegend abstützenden zweiten Gegenhalter (15) nach innen umgestülpt wird, bis die Domkappe (9) und die von dem zweiten Gegenhalter (15) abgestützte Fläche (19) des Bauteils (5; 105) eine Doppelblechlage (20) bilden, die einem Trennwerkzeug zugeführt wird.

2. Verfahren nach Anspruch 1,
**dadurch gekennzeichnet,**
**daß** die Domkappe (9) von dem ersten Gegenhalter (8) angekerbt wird, beide Gegenhalter (8, 15) als Trennwerkzeug in Umstülprichtung bewegt werden und aus der Doppelblechlage (20) Blechronden (21, 22) ausstanzen.

3. Verfahren nach Anspruch 1 oder 2,
**dadurch gekennzeichnet,**
**daß** das Umstülpen der Domkappe (9) gegen den während des Umstülpvorgangs feststehenden zweiten Gegenhalter (15) mit einer nur geringfügig über dem Innendruck (Pi) in dem Bauteil (5; 105) liegenden Gegenhalterkraft durchgeführt wird.

4. Verfahren nach einem der Ansprüche 1 bis 3,
**dadurch gekennzeichnet, daß** zum Ausstanzen der Blechronden (21, 22) die beiden Gegenhalter (8, 15) gemeinsam mit einer gegenüber der Vorschubgeschwindigkeit des ersten Gegenhalters beim Umstülpvorgang beschleunigten Stanzgeschwindigkeit (V_{Stanz}) bewegt werden.

5. Verfahren nach Anspruch 1 oder 3,
**dadurch gekennzeichnet, daß** die Doppelblechlage (20) bei ihrer Erzeugung aus der Kontur des Rohrabschnitts herausbewegt und anschließend die nach außen vorstehende Doppelblechlage mit einem als Trennwerkzeug eingesetzten Fräser entfernt wird.

6. Verfahren nach Anspruch 1 oder 3,
**dadurch gekennzeichnet, daß** als Trennwerkzeug ein koaxial zur Lageraugenachse bewegbarer Bohrer verwendet wird.

7. Verfahren nach Anspruch 5 oder 6,
**dadurch gekennzeichnet,**
**daß** der verformte Rohrabschnitt nach dem Erzeugen der Doppelblechlage dem Umformwerkzeug entnommen und einer dem Trennwerkzeug zugeordneten Einspannvorrichtung zugeführt wird.

8. Vorrichtung zum Herstellen von doppelwandigen Durchbrechungen, insbesondere zylindrische Lageraugen (16) aufweisenen Bauteilen nach dem Innenhochdruck-Umformverfahren aus einem metallischen, in ein Umformwerkzeug (4) eingelegten Rohrabschnitt (5; 105), die zwei einander gegenüberliegende, stempelartige Werkzeuge (8, 15) aufweist,
**dadurch gekennzeichnet,**
**daß** ein die Domkappe (9) einer hergestellten domartigen Abzweigung (6) abstützender erster Gegenhalter (8) mit einer stirnseitigen Schneidkante (14) ausgebildet ist und zunächst die Domkappe (9) gegen einen den Dom gegenüberliegend abstützenden zweiten Gegenhalter (15) nach innen zu einer Doppelblechlage (20) umstülpt und anschließend die Doppelblechlage (20) ausstanzt.

9. Vorrichtung nach Anspruch 8,
**dadurch gekennzeichnet,**
**daß** ein im Durchmesser gegenüber dem Halterschaft (13) kleinerer Gegenhalterkopf (12) die Schneidkante (14) aufweist.

10. Vorrichtung nach Anspruch 8 oder 9,
**dadurch gekennzeichnet,**
**daß** der Gegenhalterkopf (12) mit einer einer Schneidkantenstufe (10) nachgeschalteten Kalibrierstufe (11) versehen ist.

11. Vorrichtung nach einem der Ansprüche 8 bis 10,
**dadurch gekennzeichnet,**
**daß** der Durchmesser des zweiten Gegenhalters (15) um etwas mehr als die doppelte Dicke (S) der Wandung der domartigen Abzweigung (6) größer ist als die Schneidkantenstufe (10) des Gegenhalterkopfes (12) des ersten Gegenhalters (8).

12. Querlenker (17), zum Einbau in ein Fahrzeug, der durch Innenhochdruck-Umformen aus einem Rohrabschnitt (105) erzeugt ist und von dessen Wänden wenigstens eine mindestens ein als Anlenk-oder Befestigungspunkt ausgebildetes Lagerauge (16) aufweist,
**dadurch gekennzeichnet,**
**daß** eine Wandung des Lagerauges (16) materialeinheitlich durch Innenhochdruck-Umformen an mindestens einer Querlenkerwand angeformt ist, und die Wandung sich von der einen Außenwandung des Rohres (105) bis zur anderen Außenwandung nach innen erstreckt, derart, daß die Wandung des Lagerauges (16) eine Durchbrechung definiert, die sich an einer Öffnung der anderen Außenwandung anschließt.

## Claims

1. Method of producing double-walled openings, in particular structural parts comprising cylindrical bearing eyes (16), in accordance with the internal high-pressure forming process from a metallic pipe section (5; 105) inserted into a forming tool (4), **characterised in that** a dome-shaped branch is produced at the pipe section, the dome cap (9) is inwardly turned by the first pressure pad (8) supporting the dome being constructed during forming towards a second pressure pad (15) supporting the structural part opposite the dome until the dome cap (9) and the face (19) of the structural part (5; 105) supported by the second pressure pad (15) form a double layer of sheet metal (20), which is supplied to a separating tool.

2. Method according to Claim 1, **characterised in that** the dome cap (9) is notched by the first pressure pad (8), and both pressure pads (8, 15) are moved as a separating tool in the turning direction and stamp sheet metal circular blanks (21, 22) out of the double sheet metal layer (20).

3. Method according to Claim 1 or 2, **characterised in that** the turning of the dome cap (9) towards the second pressure pad (15) stationary during the turning operation is performed with a pressure pad force lying only slightly above the internal pressure (Pi) in the structural part (5; 105).

4. Method according to one of Claims 1 to 3, **characterised in that** to punch out the sheet metal circular blanks (21, 23) the two pressure pads (8, 15) are moved jointly at a punching velocity (V_{punch}) accelerated during the turning operation in comparison with the feed velocity of the first pressure pad.

5. Method according to Claim 1 or 3, **characterised in that** the double layer of sheet metal (20) is moved out of the contour of the pipe section during its production and then the outwardly protruding double layer of sheet metal is removed with a milling cutter used as a separating tool.

6. Method according to Claim 1 or 3, **characterised in that** a drill movable coaxially to the axis of the bearing eye is used as the separating tool.

7. Method according to Claim 5 or 6, **characterised in that** after the production of the double layer of sheet metal the deformed pipe section is removed from the forming tool and is supplied to a chucking device associated with the separating tool.

8. Device for producing double-walled openings, in particular structural parts comprising cylindrical bearing eyes (16), in accordance with the internal high-pressure forming process from a metallic pipe section (5; 105) inserted into a forming tool (4), which comprises two mutually opposite, ram-like tools (8, 15), **characterised in that** a first pressure pad (8) supporting the dome cap (9) of a produced dome-shaped branch (6) is constructed with a cutting edge (14) on the front and initially turns over the dome cap (9) inwardly, towards a second pressure pad (15) oppositely supporting the dome, into a double sheet metal layer (20) and subsequently punches out the double sheet metal layer (20).

9. Device according to Claim 8, **characterised in that** a pressure pad head (12) which has a smaller diameter than the pad shank (13) comprises the cutting edge (14).

10. Device according to Claim 8 or 9, **characterised in that** the pressure pad head (12) is provided with a calibrating step (11) following a cutting edge step (10).

11. Device according to one of Claims 8 to 10, **characterised in that** the diameter of the second pressure pad (15) is larger than the cutting edge step (10) of the pressure pad head (12) of the first pressure pad (8) by slightly more than double the thickness (S) of the wall of the dome-shaped branch (6).

12. Transverse link (17), for installation in a vehicle, which is produced from a pipe section (105) by internal high-pressure forming and of whose walls at least one comprises a bearing eye (16) constructed as a pivot or fastening point, **characterised in that** one wall of the bearing eye (16) is formed integrally by internal high-pressure forming on at least one wall of the transverse link and the wall extends inwards from one of the outer walls of the pipe (105) up to the other outer wall in such a way that the wall of the bearing eye (16) defines an opening which is connected to an orifice in the other outer wall.

## Revendications

1. Procédé pour la fabrication de pièces présentant des perforations à double paroi, en particulier des oeillets à palier (16) cylindriques selon le procédé de façonnage à haute pression interne à partir d'une section de tuyau (5 ; 105) métallique placée dans un outil de façonnage (4), **caractérisé en ce qu'**on réalise au niveau de la section de tuyau une dérivation en forme de dôme, **en ce que** le chapeau (9) du dôme est retourné vers l'intérieur par une première contre-bouterolle (8) s'appuyant sur le dôme qui se forme pendant le façonnage contre une deuxième contre-bouterolle (15) supportant la pièce à l'opposé du dôme, jusqu'à ce que le chapeau (9) du dôme et la face (19) de la pièce (5 ; 105) supportée par la deuxième contre-bouterolle (15) forment une couche double de tôle (20), qui est transportée vers un outil de séparation.

2. Procédé selon la revendication 1, **caractérisé en ce que** le chapeau (9) du dôme est encoché par la première contre-bouterolle (8), **en ce que** les deux contre-bouterolles (8, 15) sont déplacées comme outil de séparation dans le sens du retournement et découpent des ronds en tôle (21, 22) de la couche double de tôle (20)

3. Procédé selon la revendication 1 ou 2, **caractérisé en ce que** le retournement du chapeau du dôme (9) contre la deuxième contre-bouterolle (15), qui est fixe pendant le processus de retournement, est réalisé avec une force de contre-bouterolle qui n'est que légèrement supérieure à la pression interne (Pi) dans la pièce (5 ; 105).

4. Procédé selon l'une quelconque des revendications 1 à 3, **caractérisé en ce qu'**on déplace, pour le découpage des ronds en tôle (21, 22), les deux contre-bouterolles (8, 15) ensemble avec une vitesse de découpage (V_{découp}) accélérée par rapport à la vitesse d'avancement de la première contre-bouterolle lors du processus de retournement.

5. Procédé selon la revendication 1 ou 3, **caractérisé en ce que** la couche double de tôle (20) est déplacée lors de sa formation hors du contour de la section de tuyau et **en ce qu'**ensuite la couche double de tôle en saillie vers l'extérieur est éliminée avec une fraise utilisée comme outil de séparation.

6. Procédé selon la revendication 1 ou 3, **caractérisé en ce qu'**on utilise comme outil de séparation un foret pouvant être déplacé coaxialement par rapport à l'axe de l'oeillet de palier.

7. Procédé selon la revendication 5 ou 6, **caractérisé en ce que** la section de tuyau déformée, après l'obtention de la couche double de tôle est enlevée de l'outil de façonnage et est transportée vers un dispositif de serrage associé à l'outil de séparation.

8. Dispositif pour la fabrication de pièces présentant des perforations à double paroi, en particulier des oeillets à palier (16) cylindriques, selon le procédé de façonnage à haute pression interne à partir d'une section de tuyau (5 ; 105) métallique placée dans un outil de façonnage (4), qui présente deux outils (8, 15) de type matrice, opposés l'un à l'autre, **caractérisé en ce qu'**une première contre-bouterolle (8) s'appuyant sur le chapeau (9) d'un dôme d'une dérivation (6) réalisée en forme de dôme, est réalisée avec une arête coupante (14) sur sa face et retourne d'abord le chapeau (9) du dôme vers l'intérieur contre une deuxième contre-bouterolle (15) s'appuyant sur le dôme à l'opposé, en une couche double de tôle (20) et découpe ensuite la couche double de tôle (20).

9. Dispositif selon la revendication 8, **caractérisé en ce qu'**une tête (12) de contre-bouterolle, dont le diamètre est plus petit que la tige de fixation (13), présente l'arête coupante (14).

10. Dispositif selon la revendication 8 ou 9, **caractérisé en ce que** la tête de contre-bouterolle (12) est pourvue d'un étage de calibrage (11) disposé en aval de l'étage de l'arête (10).

11. Dispositif selon l'une quelconque des revendications 8 à 10, **caractérisé en ce que** le diamètre de la deuxième contre-bouterolle (15) est supérieur d'environ le double de l'épaisseur (S) de la paroi de la dérivation (6) en forme de dôme par rapport à l'étage (10) de l'arête coupante de la tête (12) de la première contre-bouterolle (8).

12. Bras oscillant transversal (17) destiné à être monté dans un véhicule, qui est obtenu par le façonnage sous haute pression interne à partir d'une section de tuyau (105) et dont au moins une des parois présente un oeillet à palier (16) exécuté comme point d'articulation ou de fixation, **caractérisé en ce qu'**une paroi de l'oeillet à palier (16) est façonnée en un seul matériau par façonnage sous haute pression interne sur au moins une paroi de bras oscillant transversal et **en ce que** la paroi s'étend vers l'intérieur d'une paroi externe du tuyau (105) jusqu'à l'autre paroi externe de telle manière que la paroi de l'oeillet à palier (16) définit une perforation, qui se raccorde à une ouverture de l'autre paroi externe.
